# EUROPEAN PATENT SPECIFICATION

(11) **EP 0 415 275 B1**
(45) Date of publication and mention of the grant of the patent: **11.10.1995**
(21) Application number: 90116203.2
(22) Date of filing: 24.08.1990
(51) Int. Cl.: G02B 27/00, G02B 27/01

(54) **Louvered reflective head-up display for automobiles**
"Head-up Display" für Kraftfahrzeuge mit antireflektierendem Jalousie-Filter
Afficheur tête haute pour automobiles avec persienne de protection contre les reflets

(30) Priority: 31.08.1989 US 401260
(43) Date of publication of application: 06.03.1991
(73) Proprietor: Hughes Aircraft Company, Los Angeles, California 90045-0066 (US)
(72) Inventor: Ferrer, John J., Los Angeles, California 90045 (US)
(74) Representative: Witte, Alexander, Dr.-Ing.

(56) References cited:
- DE-A- 2 519 308
- JP-A-61 238 015
- US-A- 3 887 273
- US-A- 4 365 866
- US-A- 4 806 904
- PATENT ABSTRACTS OF JAPAN, vol. 9, no. 236 (P-390) 21 September 1985 & JP A 60088926
- PATENT ABSTRACTS OF JAPAN, vol. 11, no. 84 (P-556)(2531) 13 March 1987 & JP A 61238015
- PATENT ABSTRACTS OF JAPAN, vol. 11, no. 364 (M-646) 27 November 1987 & JP A 62139728
- PATENT ABSTRACTS OF JAPAN, vol. 9, no. 236 (P-390) 21 September 1985 & JP A 60088925

## Description

The disclosed invention relates to a vehicle comprising a head-up display having means for producing imaging illumination from an image source arranged in a housing for directing imaging illumination toward a combiner which is arranged for partially reflecting the imaging illumination from the image source to produce a virtual image of the image source viewable by the operator of the vehicle, a transparent window arranged in the optical path between the image source and the combiner for transmitting the imaging illumination from the image source to the combiner said transparent window and said housing substantially providing for sealing the image source, and a louver structure arranged in the optical path between the image source and the combiner comprising a plurality of louver blades for permitting the passage of a substantial amount of the transmitted imaging illumination and for reducing reflections off said transparent window.

Head-up displays for vehicles such as automobiles are utilized to produce a virtual image instrument display at or ahead of the vehicle windshield, which provides for increased safety since a reading of the head-up instrument display does not require shifting of the field of view or refocusing by the vehicle operator.

Vehicle head-up displays can include an imaging illumination source comprising optical elements and an image source secured within an enclosed housing. The imaging illumination passes through protective transparent windows on the top of the enclosed housing to reach a combiner that comprises a portion of the windshield, for example. The advantage of a closed housing is that the protective window prevents physical damage to the optical elements and prevents debris from falling on the optical elements.

An important consideration with an enclosed imaging illumination source is sunlight and/or skylight reflection off the protective window into the eyes of the vehicle operator and other occupants. Bright or dazzling reflections to the vehicle operator's eyes present a potentially hazardous circumstance. A further consideration is the depth of the imaging illumination source (as measured in the vertical direction when installed), since a large depth would require design changes to the instrument panel and installation that requires disassembly of the instrument panel for removal.

A vehicle comprising a head-up display as outlined in the beginning is known from patent abstracts of Japan, volume 11, No. 364 (P-556), (2531), March 13, 1987 and JP-A-61238015. The known design includes a transparent plate having a plurality of light shield plates arranged in a transparent resin film at constant intervals on top of a housing from which light emerges from a light source. The light shield plates transmit only light which is incident at a small angle to the perpendicular of the film surface. A polarizing plate is mounted on top of the transparent resin film to block ambient light from the observer' s eye.

Another prior art design (patent abstracts of Japan, volume 11, No. 364 (M-646), November 27th, 1987, JP-A-62139728) uses a display unit which is mounted on a glove compartment of a vehicle with its display surface upwardly and confronting a windshield glass. A louver is mounted above the display unit and the inside surface of the windshield glass is covered with a display film. With such an arrangement the display is shown on the film on the inside of the windshield glass. Since the display surface of the display unit is shielded off by the louver, a clear display shall be reached and adverse effects to a confronting vehicle shall be prevented.

Still another prior art design (patent abstracts of Japan, volume 9, No. 236 (P-93), September 21, 1985, JP-A-60088926) uses a light direction selector which is provided between the display element and the projection plate which is set up in front of the inside surface of the windshield. The light direction selector is sectioned in a honeycomb shape to provide a single display image which can be viewed by the eye of an operator.

Still another prior art design (patent abstracts of Japan, volume 9, No. 236 (P-390), September 21, 1985, JP-A-60088925) uses a louver type translucent plate which is stuck on the internal surface of the windshield of a vehicle. The display image of a display element is projected upon the translucent plate and reflected by the plate to reach the eye of a driver, who recognizes the display image. This display image is reflected only by the translucent plate and reflected neither by the reverse surface nor by the surface of the windshield, thereby preventing a double image from being formed on the reverse surface or top surface.

Finally, US-A-4,365,866 discloses a light masking device improving image contrast on television screens or similar video display screens under conditions of high ambient light. The light masking device comprises a plurality of elongated planar slats extending horizontally across the width of the screen, the slats being differentially inclined from the horizontal in the directions of their widths so as to converge on a horizontal line at a selected height and a selected distance from the screen.

It is an object of the invention to provide a vehicle comprising a head-up display having an imaging illumination source with a protective transparent window that does not produce unwanted reflections and which does not require increased depth of the housing. In addition, the head-up display shall have a low profile imaging illumination source that does not produce unwanted reflections of sunlight and skylight.

This objective is achieved by providing a vehicle comprising a head-up display as mentioned in the beginning with a plurality of louver blades that are substantially aligned with the nominal oberserver eye position, such as to lie parallel to a light ray passing through the location of the louver blade reflected off the combiner toward the observer and reach said nomial observer eye position.

Such individual alignment of the louver blades according to the invention reduces the attenuation introduced by the louver structure. The louver structure overlying the transparent window permits the passage of imaging illumination while eliminating ambient reflections off the transparent window that would otherwise reach the vehicle operator's eyes.

### BRIEF DESCRIPTION OF THE DRAWING

The advantages and features of the disclosed invention will readily be appreciated by persons skilled in the art from the following detailed description when read in conjunction with the drawing wherein:

FIG. 1 is a schematic illustration of the major components of the disclosed automobile head-up display system.

FIG. 2 is a schematic sectional view of the imaging illumination source of the head-up display system of FIG. 1.

### DETAILED DESCRIPTION

In the following detailed description and in the several figures of the drawing, like elements are identified with like reference numerals.

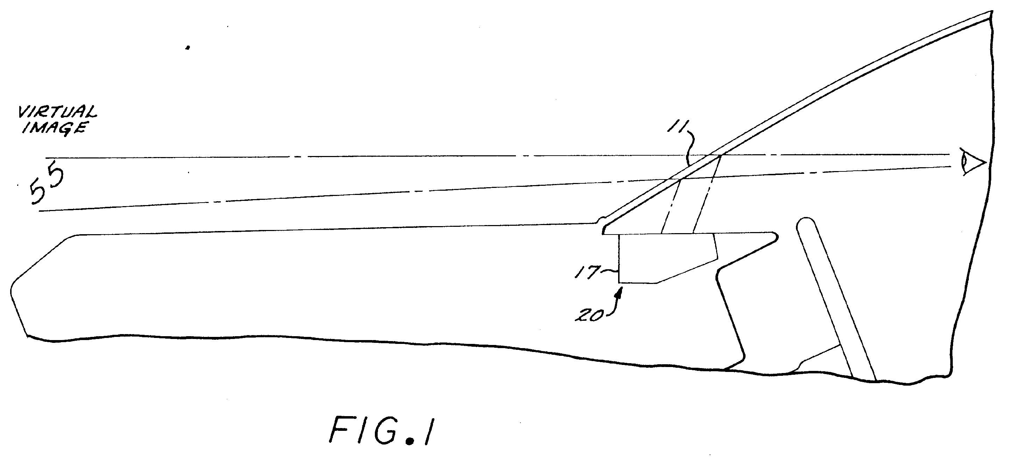

Referring now to FIG. 1, shown therein is a head-up vehicle instrument display system that includes an imaging illumination source 20 and a combiner element 11 that may comprise a portion of the vehicle windshield, an automobile windshield for example. The imaging illumination source 20 is preferably of sufficiently low profile that it can be in a cavity in the top of the dashboard, for example. The combiner element 11 partially reflects the imaging illumination toward the driver so as to produce a virtual image of a light emitting image source within the imaging illumination source 20 at a location ahead of the vehicle windshield, for example.

By way of illustrative example, the combiner element 11 comprises a portion of the inside surface of the windshield, or a beamsplitter coating applied to the inside surface of the windshield or between the layers of the windshield, for example.

While the disclosed embodiments are described in the context of a vehicle such as an automobile, it should be appreciated that the head-up display system of the invention can be used with vehicles that do not have windshields, in which case the combiner would comprise a transparent panel or similar device.

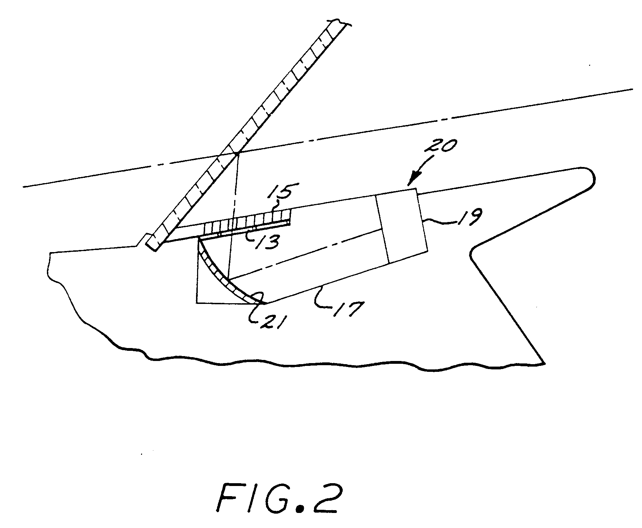

Referring now to FIG. 2, shown therein is a schematic sectional view of the imaging illumination source 20 which include a housing 17, a transparent window 13 secured in the top portion of the housing, and a louver structure 15 overlying the transparent window. The transparent window 13, which can be a generally planar window for example, and the housing 17 provide for a substantially sealed modular imaging illumination source having optical elements sealed from debris and protected from physical damage. Moreover, with an appropriately low profile, the imaging illumination source 20 is readily installed in a cavity in the top portion of the instrument panel, and is easily removed by lifting it out of the cavity.

Imaging illumination is produced by an image source 19, which by way of example can be a vacuum fluorescent display or a liquid crystal display. The imaging illumination is directed through the transparent window 13 and the louver structure 15 by appropriate optical elements that are configured to reduce the external depth or profile of the imaging illumination source 20, including for example a curved mirror 21.

By way of specific example, the imaging illumination source 20 and its receiving cavity in the instrument panel are configured so that the transparent window is close to and below a minimum acceptable line of sight, such that which has been established in the automobile industry, with the top of the louver structure 15 being generally aligned such line of sight.

The transparent window 13 is located at an angular position that is based on various considerations including the particular configuration of the housing 17 of the imaging source 20, the height of the louvers, control of internal reflections within the shape of the top surface of the conformity with the shape of the top surface of the instrument panel or minimum sight line is desired, and whether the louver structure 15 is to be within the field of view of the driver.

The louver structure 15 includes individual thin louver blades that are at different angular orientations. If the individual louver blades are set at different angles, then each is adjusted to be substantially aligned with the nominal observer eye position (i.e., parallel to a light ray that passes through location of the louver blade and reaches such nominal eye position). Such individual alignment reduces the attenuation introduced by the louver structure 15.

The height of the louver blades and the spacing therebetween are determined by considerations of factors including the thickness of each blade, the amount of depth allocated for the louver structure, and the acceptable number of blurred lines across the display caused by the louver blades. Greater spacing between the blades requires greater blade height, which in turn increases the depth of the imaging source 20. Closer spacing increases the obstruction produced by the louver structure.

The louver structure is preferably finished in a matte black color to reduce reflections therefrom, and can be a unitary structure comprising molded plastic, for example.

The foregoing has been a disclosure of an automobile head-up display that includes an enclosed imaging source that reduces unwanted reflections off the transparent sealing window of the imaging source. Particularly disclosed is a louver structure that does not impose substantial design requirements or restrictions on the structure of the imaging source and is readily utilized with different imaging source structures. The louver structure further permits for an imaging source of sufficiently shallow depth or profile that it can be installed in a shallow cavity in the top of the instrument panel, which permits removal and replacement without partial or complete disassembly of the instrument panel.

Although the foregoing has been a description and illustration of specific embodiments of the invention, various modifications and changes thereto can be made by persons skilled in the art without departing from the scope of the invention as defined by the following claims.

## Claims

1. A vehicle comprising a head-up display comprising:
- means for producing imaging illumination from an image source (19) arranged in a housing (17) for directing said imaging illumination toward a combiner (11) which is arranged to partially reflect said imaging illumination from said image source (19) to produce a virtual image of the image source (19) viewable by the operator of the vehicle;
- a transparent window (13) arranged in the optical path between the image source (19) and the combiner (11) for transmitting said imaging illumination from said image source (19) to said combiner (11); said transparent window (13) and said housing (17) providing substantially for sealing said image source (19); and
- a louver structure (15) arranged in the optical path between the image source (19) and the combiner (11) comprising a plurality of louver blades for permitting the passage of a substantial amount of said transmitted imaging illumination and for reducing reflections off said transparent window (13);
characterized in that said each of said louver blades is aligned with the nominal observer eye position, such as to lie parallel to a light ray passing through the location of the louver blade, reflected off the combiner toward the observer and reaching said nominal observer eye position.

2. The vehicle of claim 1, characterized in that said combiner (11) comprises an inside surface of a windshield of the vehicle.

3. The vehicle of claim 1 or 2, characterized in that said combiner (11) comprises a beamsplitter coating supported by the windshield of the vehicle.

4. The vehicle of any of claims 1 through 3, characterized in that said transparent window (13) for transmitting said imaging illumination is generally planar.

## Patentansprüche

1. Fahrzeug umfassend ein Headup-Display umfassend:
- Mittel zum Erzeugen abbildender Beleuchtung von einer Bildquelle (19), die in einem Gehäuse (17) angeordnet ist, um die abbildende Beleuchtung auf einen Kombinator (11) zu richten, der vorgesehen ist, um die abbildende Beleuchtung von der Bildquelle (19) teilweise zu reflektieren, um ein virtuelles Bild der Bildquelle (19) zu erzeugen, das für den Bediener des Fahrzeugs sichtbar ist;
- ein transparentes Fenster (13), das im optischen Weg zwischen der Bildquelle (19) und dem Kombinator (11) angeordnet ist, um die abbildende Beleuchtung von der Bildquelle (19) zu dem Kombinator (11) zu übertragen, wobei das transparente Fenster (13) und das Gehäuse (17) im wesentlichen eine Abdichtung für die Bildquelle (19) bewirken; und
- eine Rasterstruktur (15), die in dem optischen Weg zwischen der Bildquelle (19) und dem Kombinator (11) angeordnet ist und die eine Mehrzahl von Rasterlamellen umfaßt, um einen Durchlaß eines erheblichen Anteiles der übertragenen abbildenden Beleuchtung zu erlauben und um Reflektionen von dem transparenten Fenster (13) zu reduzieren;
dadurch gekennzeichnet, daß jede der Rasterlamellen mit der normalen Augenposition eines Beobachters ausgerichtet ist, derart, daß sie parallel zu einem Lichtstrahl ist, der durch den Ort der Rasterlamelle fällt, von dem Kombinator zu dem Beobachter reflektiert wird und die normale Augenposition des Beobachters erreicht.

2. Fahrzeug nach Anspruch 1, dadurch gekennzeichnet, daß der Kombinator (11) eine Innenfläche einer Windschutzscheibe des Fahrzeugs umfaßt.

3. Fahrzeug nach Anspruch 1 oder 2, dadurch gekennzeichnet, daß der Kombinator (11) eine Strahlteilerbeschichtung umfaßt, die auf der Windschutzscheibe des Fahrzeugs vorgesehen ist.

4. Fahrzeug nach irgendeinem der Ansprüche 1 bis 3, dadurch gekennzeichnet, daß das transparente Fenster (13) zur Übertragung der abbildenden Beleuchtung im wesentlichen eben ist.

## Revendications

1. Un véhicule comportant un dispositif d'affichage tête haute comprenant :
- des moyens pour produire une illumination de formation d'image à partir d'une source d'image (19) disposée dans un boîtier (17), pour diriger cette illumination de formation d'image vers un dispositif de combinaison (11) qui est conçu pour réfléchir partiellement l'illumination de formation d'image provenant de la source d'image (19), afin de produire une image virtuelle de la source d'image (19) observable par l'opérateur du véhicule;
- une fenêtre transparente (13) disposée dans le chemin optique entre la source d'image (19) et le dispositif de combinaison (11), pour transmettre l'illumination de formation d'image de la source d'image (19) au dispositif de combinaison (11); la fenêtre transparente (13) et le boîtier (17) assurant pratiquement la fermeture hermétique de la source d'image (19); et
- une structure de paralume (15), disposée dans le chemin optique entre la source d'image (19) et le dispositif de combinaison (11), comprenant un ensemble de lames de paralume pour permettre le passage d'une fraction notable de l'illumination de formation d'image transmise, et pour réduire des réflexions sur la fenêtre transparente (13);
caractérisé en ce que chacune des lames de paralume est alignée avec la position nominale de l'oeil de l'observateur, de façon à s'étendre parallèlement à un rayon lumineux qui passe par la position de la lame de paralume, qui est réfléchi par le dispositif de combinaison vers l'observateur et qui atteint la position nominale de l'oeil de l'observateur.

2. Le véhicule de la revendication 1, caractérisé en ce que le dispositif de combinaison (11) comprend une surface intérieure d'un pare-brise du véhicule.

3. Le véhicule de la revendication 1 ou 2, caractérisé en ce que le dispositif de combinaison (11) comprend un revêtement diviseur de faisceau qui est supporté par le pare-brise du véhicule.

4. Le véhicule de l'une quelconque des revendications 1 à 3, caractérisé en ce que la fenêtre transparente (13) pour transmettre l'illumination de formation d'image est de forme générale plane.
